# EUROPEAN PATENT APPLICATION

(11) **EP 4 653 682 A1**
(43) Date of publication of application: **26.11.2025**
(21) Application number: 25171976.1
(22) Date of filing: 23.04.2025
(51) Int. Cl.: F02C 3/22, F02C 7/30

(54) **HYDROGEN FUELLED AIRCRAFT PROPULSION SYSTEM OPERATING METHOD**

(30) Priority: 21.05.2024 GB 202407187
(71) Applicant: Rolls-Royce plc, London N1 9FX (GB)
(72) Inventor: Gale, Louise, Derby, DE24 8BJ (GB)
(74) Representative: Rolls-Royce plc

(57) **Abstract**

A method of operating a hydrogen fuelled aircraft propulsion system (20), the method comprises exposing one or more components (36a, 38a, 40, 34a, 48, 50, 52, 54, 58) that will contact hydrogen during engine running to an oxygen containing gas at a temperature suitable to cause passivation of at least part of the component (36a, 38a, 40, 34a, 48, 50, 52, 54, 58).

## Description

### TECHNICAL FIELD

This disclosure relates to a method of operating a hydrogen fuelled aircraft propulsion system.

### BACKGROUND

In order to limit emissions of carbon dioxide, use of hydrogen stored as a liquid as an alternative to conventional hydrocarbon fuel in aircraft gas turbine engines has been proposed. However, exposure of certain materials to hydrogen can result in "hydrogen embrittlement", which may reduce the performance of components over time. The present disclosure seeks to address this.

### SUMMARY

In a first aspect there is provided a method of operating a hydrogen fuelled aircraft propulsion system, the method comprising:
exposing one or more components that will contact hydrogen during engine running to an oxygen containing gas at a temperature suitable to cause passivation of at least part of the component.

It has been found that, by exposing components in the propulsion system to oxygen at suitable temperatures, a passivation layer can be formed on the materials. This passivation layer can greatly reduce the rate at which hydrogen penetrates the material, leading to reduced embrittlement. Accordingly, a wider range of materials can be selected from for the propulsion system. Alternatively or in addition, longer component life, lighter component weight or greater component performance can be realised.

The oxygen containing gas may comprise air.

The component may comprise a component of a fuel system or of a main gas flow path of a gas turbine engine.

The component may comprise a fuel pump, fuel filter, fuel tank, fuel accumulator, fuel pipe, fuel valve, fuel injector or fuel heater of the fuel system.

The component may comprise a combustor or a turbine of a gas turbine engine of the aircraft propulsion system.

The method may comprise flowing an oxygen containing gas through a fuel line of the fuel system at a temperature suitable to cause passivation of at least part of the fuel system.

The method may comprise flowing an oxygen containing gas through a main gas flow path of a gas turbine engine prior to running the gas turbine engine.

The method may comprise a pre-conditioning cycle comprising running the gas turbine on a fuel other than hydrogen prior to running the gas turbine engine with hydrogen fuel.

The component may comprise one or more of a steel such as stainless steel, low-carbon steel or high-strength pipeline steel, a nickel alloy, aluminium metal or an aluminium alloy.

Where the component comprises stainless steel, the method may comprise exposing the component to air at a temperature between 200°C and 400°C, and may comprise exposing the component for a period between 1 minute and 10 hours.

Where the component comprises a nickel alloy, the method may comprise exposing the component to air at a temperature between 600°C and 1200°C.

According to a second aspect there is provided an aircraft propulsion system comprising a gas turbine engine, a fuel system configured to provide hydrogen fuel to the gas turbine engine, and a passivation air system configured to provide oxygen containing gas to a fuel line of the fuel system at a temperature sufficient to cause passivation of at least one component of the fuel system.

The gas turbine engine may comprise a compressor and a bleed line, the bleed line being configured to provide compressor bleed air to cause passivation of at least one component of the fuel system.

The gas turbine engine may comprise a core exhaust system and a core exhaust line configured to provide core exhaust air to cause passivation of at least one component of the fuel system.

The fuel system may comprise a hydrogen fuel tank and a further fuel tank such as a kerosene or a methane fuel tank.

The fuel system may comprise a further fuel line configured to provide the further fuel to the gas turbine engine.

### BRIEF DESCRIPTION OF THE DRAWINGS

An embodiment will now be described by way of example only with reference to the accompanying drawings, which are purely schematic and not to scale, and in which:
Figure 1 shows a first cryogenic-fuelled airliner comprising a propulsion system comprising cryogenic-fuelled turbofan engines; and
Figure 2 is a functional block diagram showing a fuel system for the propulsion system of figure 1.

### DETAILED DESCRIPTION

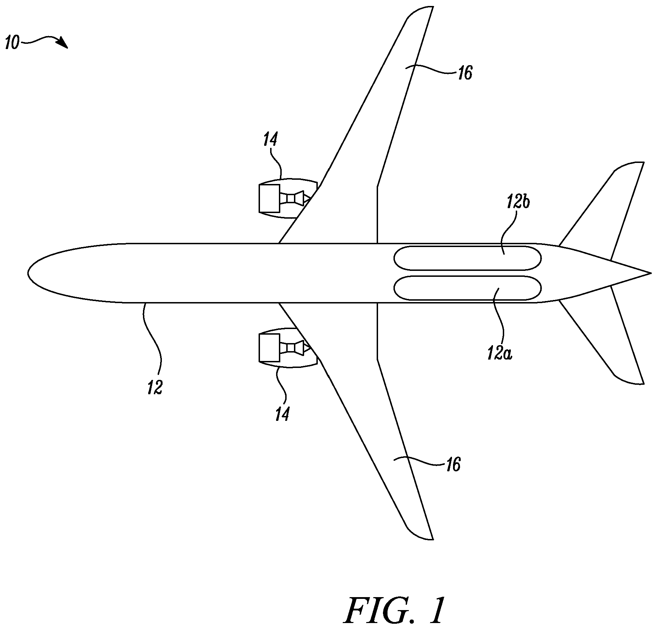

A hydrogen-fuelled airliner is illustrated in Figure 1. In this example, the airliner 10 is of substantially conventional tube-and-wing twinjet configuration with a central fuselage 12 and substantially identical first and second turbofan engines 14 mounted underneath respective wings 16.

First and second fuel storage tanks 12a, 12b are located in the fuselage 102, and are installed in a side-by-side configuration. The aircraft is a "dual-fuel" aircraft, configured to utilise hydrogen fuel from a hydrogen fuel tank 12a, and a further fuel from a further fuel tank 12b. The further fuel can comprise any suitable fuel other than hydrogen, and in some embodiments comprises conventional kerosene fuel, "sustainable" kerosene fuel, or methane. The hydrogen fuel storage tank 12a is typically arranged to store liquid hydrogen or may be configured to store compressed gaseous or supercritical hydrogen.

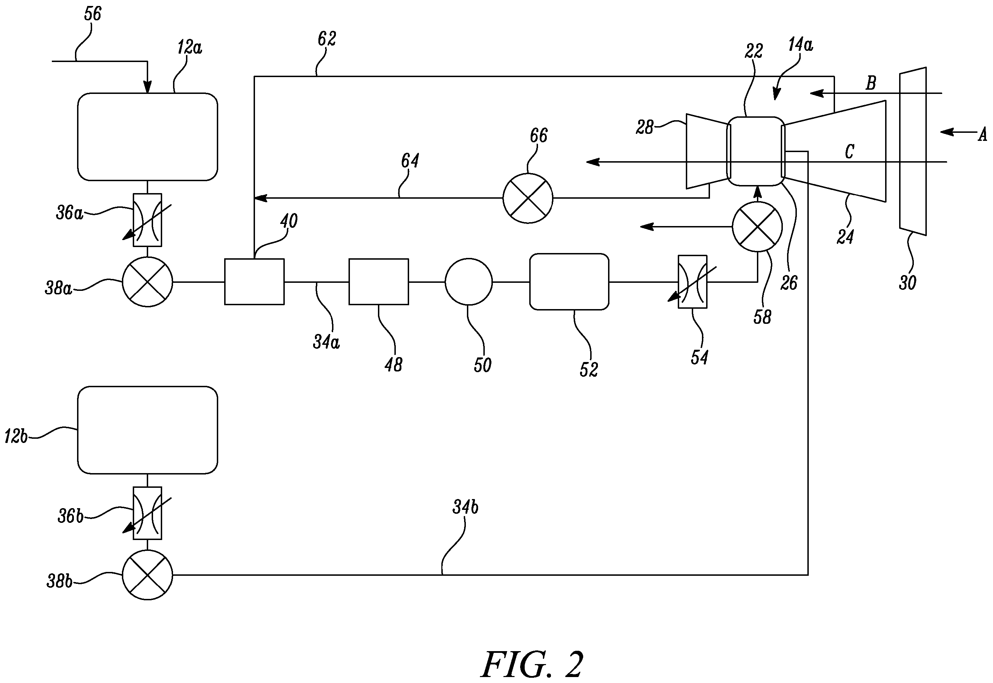

The engines 14, fuel tanks 12a, 12b, and a fuel system 18 form a propulsion system 20. A functional block diagram of the propulsion system 20 is shown in figure 2. As will be understood, the propulsion system 20 is suitable for use with the aircraft of figure 1 and may be suitable for use with other aircraft configurations, since as blended wing body types.

The engines 14a, 14b are in the form of gas turbine engines (only one of which is shown in figure 2 for simplicity) each comprising a core gas turbine 22.

The core gas turbine 22 comprises, in fluid flow series, a compressor 24, a combustor 26 and a turbine 28. The turbine 28 and compressor 24 are interconnected by a shaft (not shown). It will be appreciated that in alternative embodiments, the core gas turbine could be of two-shaft or three-shaft configuration, and / or could comprise a reduction gearbox. For example, the gas turbine engine could comprise separate low and high-pressure compressors and turbines interconnected by respective low and high-pressure shafts. The turbine 28 (or in some embodiments, a separate fan-drive turbine) drives a fan 30. Inlet air A is ingested by the fan 30, which provides a core airflow C to the gas turbine engine core 22, and a bypass airflow B, which bypasses the core 22, and provides thrust via a bypass nozzle (not shown).

As shown in figure 2, both the hydrogen fuel tank and further fuel tank 12b are associated with a combustor 26 of the gas turbine engines 14a, 14b via a respective hydrogen and further fuel line 34a, 34b.

At least fuel pumping and control equipment is associated with each fuel line 34a, 34b.

Immediately downstream of each tank 12a, 12b is a respective fuel shut-off valve 36a, 36b, which controls flow from the respective tank 12a, 12b to the respective fuel line 34a, 34b. A respective pump 38a, 38b is then provided in each fuel line 34a, 34b downstream of the respective shut-off valve 36a, 36b, to pressurise and drive flow through the respective fuel line 34a, 34b.

Referring now to the hydrogen fuel line 34a, a fuel heater 40 is provided downstream in hydrogen fuel flow of the hydrogen pump 38a in the fuel line. The fuel heater 40 is configured to warm the hydrogen fuel in the hydrogen fuel line 34a, to thereby vaporise it from a liquid phase to a gaseous or supercritical phase. Where the hydrogen is stored as a gas or supercritical fluid, the heater 40 may be omitted, or may be configured to warm the hydrogen fuel without an associated phase change. Typically, where the hydrogen fuel is stored as a liquid, the heater 40 is configured to warm the fuel from a temperature below its critical temperature of approximately 33 Kelvin, to a temperature suitable for combustion, for example above 100 Kelvin.

The heater 40 comprises an auxiliary combustor configured to combust a portion of hydrogen fuel tapped off from the main hydrogen fuel line 34a. The auxiliary combustor 40 is also provided with high-pressure air for combustion from a bleed line from the compressor 24 of one of the gas turbine engines 14a, 14b. In alternative configurations, the heater 40 may comprise an electric heater or an engine exhaust heat driven recuperator.

Downstream in hydrogen fuel flow of the heater 40 are one or more optional further components. In this embodiment, a heat exchanger 48 is provided. In this example, the heat exchanger comprises an oil cooler configured to exchange heat between engine oil from a respective engine 14a, 14b and hydrogen fuel, to thereby heat hydrogen fuel further and cool engine oil.

One or more filters 50 are also provided. These may be necessary to filter contaminants such as ice or other solid particles or liquid from the fuel stream.

A gaseous hydrogen fuel buffer tank 52 is also provided in the hydrogen fuel line 34a and is typically installed downstream of the filter 50. The buffer tank 50 is configured to store high-pressure gaseous hydrogen for delivery to the combustor 26. The buffer tank 52 allows for relatively constant flow pressure and mass flow rates to the combustor 26 during operation, despite varying pressure and mass-flow rates from the pump 38a, and varying demand from the combustor 26.

Finally, the hydrogen fuel line 34a comprises a Fuel Management Unit (FMU) in the form of a throttle valve 54 configured to control the mass-flow and pressure of gaseous hydrogen fuel delivered to the engine 14a, 14b.

As will be appreciated, the engine can be run in one of a hydrogen fuelled mode, an alternative fuelled mode, or a combination of the two.

In a hydrogen fuelled mode, the shutoff valve 36a is open and shutoff valve 36b is closed, and the pump 38a is operated to pressurise hydrogen fuel flow. Liquid hydrogen fuel is vapourised in the heater 40, further heated by the further heat exchanger 48, filtered by the filter 42, stored by the buffer tank 52, metered by the FMU 54, and injected into the combustor 26. Similarly, in an alternative fuelled operating mode, the shutoff valve 36a is closed and shutoff valve 36b is open, and the pump 38b is operated to pressurise alternative fuel flow, which is injected into the combustor. In a mixed operating mode, both valves 36s, 36b are opened, and the pumps 38a, 38b operate to provide both fuels to the engine.

As will be appreciated, various components of the fuel system are subjected to contact with hydrogen fuel during operation. Components of the fuel system are subject to particularly high concentrations of hydrogen. In particular, the valves 36a, 54, pump 38a, heater 40, heat exchanger 48, filter 50, buffer tank 52 and the hydrogen fuel line 34a itself are in contact with hydrogen during all stages of operation. Hydrogen may also remain in these systems for long periods while the system is running in the alternative fuelled mode, as well as during shutdown.

It has been found that prolonged exposure to hydrogen can cause mechanical damage to certain materials through a process called "hydrogen embrittlement". Hydrogen embrittlement is caused by the penetration of hydrogen into the material causing a loss in ductility and tensile strength (i.e. it becomes brittle). Consequently, hydrogen embrittlement may result in a reduction in fatigue life.

Materials susceptible to hydrogen embrittlement include most steels, nickel alloys, titanium, and aluminium. Unfortunately, such materials are of high importance in aircraft propulsion systems in view of their high strength to weight ratios, resistance to corrosion, and long fatigue lives. The avoidance of the use of such materials to avoid hydrogen embrittlement may lead to reduced propulsion system performance. On the other hand, embrittlement may also cause reduced performance over time, and so may increase maintenance requirements.

One solution to such issues is the provision of an oxide layer coating components which contact hydrogen in use. Such oxide layers provide a barrier to hydrogen infiltration into the crystal structure of a metal. In one study, the diffusion rate of titanium dioxide films was found to be 10⁻¹³ cm²/s, three orders of magnitude lower than that in Ti metal. However, such oxide layers themselves are susceptible to mechanical erosion or chemical corrosion and may have to be replaced over time. Accordingly, increased maintenance may still be required to maintain the oxide coating. Complex inspection methods may also be required to ensure that the oxide coating is in place, since embrittlement may proceed at a much greater rate where the oxide coating is removed.

The inventors have found that an oxide coating can be provided or renewed by a method of operation as described below.

In general, the method comprises providing oxygen containing gas at a temperature sufficient to provide a passivation layer to one or more component of the propulsion system.

The oxygen containing gas typically comprises air, is this is readily available, and can be provided by the engine itself or from an external source.

Referring first to the fuel system 18, a passivation layer can be provided by flowing high-temperature air through the fuel line 34a. In one example, high pressure air can be provided to the fuel tank 12a through a fuel-fill line 56 or a dedicated high-temperature air-line (not shown), and flowed downstream by opening the valves 36a, 54 and flowing air from the fuel tank 12, and through each downstream component 36a, 38a, 40, 50, 52, 54 and the fuel line itself 34a. Such a process must be conducted when the engine 14 is non-operational, and the system is purged of hydrogen to avoid the risk of auto-ignition of hydrogen in the fuel system.

In a second example, the passivation air may be provided by one of the engines 14a, 14b. For example, air may be fed through the fuel line from the compressor 24 via the bleed line 62 to the heater 40. Since the compressor air is typically at a high temperature in view of its high pressure, the compressor bleed air may be at a sufficient temperature to form a passivation layer within the fuel line.

This operation must however be conducted when the hydrogen fuel line 34a does not have hydrogen present, to avoid risk of fire. As such, the compressor bleed is operated when the engine 14a is running on the alternative fuel provided via the second fuel line 34b. Accordingly, the passivation process can be operated on a regular basis, without interrupting operation of the aircraft. During such operation, air may be vented to ambient via a vent valve 58, thereby bypassing the injector, or may be reintroduced into the compressor 24 at an earlier compressor stage.

In one example, engine combustion products may be utilised to provide the high temperature air, particularly where the components comprise nickel alloys. A core exhaust line from a core exhaust system in the form of a turbine bleed 64 controlled by a valve 66 may be provided, configured to selectively provide high-temperature combustion products from the main gas turbine engine core 22 to the fuel system. Since gas turbine engines typically comprise oxygen in their core exhaust streams (in view of dilution and cooling air flows), sufficient oxygen may remain in the turbine exhaust flow to provide fuel system passivation. The higher temperature of such flows may reduce treatment times, and the waste heat represents a smaller loss to the engine thermodynamic cycle compared to compressor bleed air. On the other hand, the components must be designed to withstand the higher temperatures of such flows.

Again, the passivation procedure must be conducted when the fuel system is purged of hydrogen, and so may be conducted when the engine is run on the alternative fuel from the alternative fuel system.

A suitable temperature and duration to provide the passivation layer will depend on the materials utilised in the components 34a, 36a, 38a, 40, 50, 52, 54. In one example, one or more component comprises stainless steel. Stainless steel may be utilised in particular for the fuel line 34a, as well as housings for the valves 36, 54, pump 38a, heater 40, filter 50 and buffer tank 52. Suitable stainless steel includes 316L, as defined in Aerospace Material Specifications standards AMS 5653 or AMS5507.

Suitable air temperatures for passivation of stainless steel are typically in the range of 200°C to 600°C, with durations lasting between a few minutes and several hours depending on the thickness of coating required, and the interval between passivation treatments. Such temperatures are within the range of typical high-pressure compressor bleed flows, and so treatment using compressor bleed air may be applicable. Low-carbon steel may also be passivated under similar conditions and durations. For example, flowing 250 °C air over SAE1010 steel for 3to 12 minutes is sufficient to generate a 20 to 50 nano-metre thick oxide scale. In the case of high-strength pipeline steel, which may be suitable for the fuel line 34a, a 1-micron thick oxide coating can be grown on X80 steel by subjecting the surface to 300 °C air for 250 hours.

Similarly, in the case of nickel alloys, suitable temperatures range between 600 °C and 1200 °C, with durations again lasting between a few minutes and several hours. Nickel alloys are typically employed in high-temperature components such as the turbine 28 but may also be used in lower temperature components such as those found in the fuel system in view of its low susceptibility to corrosion. However, such materials may have a relatively high susceptibility to hydrogen embrittlement. In such a case, a dedicated high temperature air supply may be required, since compressor air may be insufficient. Alternatively, core exhaust air may be utilised.

In a further example, the fuel system may comprise aluminium metal or one or more aluminium alloy. One or more components of the engine core may also comprise aluminium alloys. For example, compressor blades and stators may comprise aluminium alloys. Compressor and turbine housings may also comprise aluminium alloys. In one particular example, at least a part of the turbine 28 may comprise aluminium alloy, such as titanium aluminide. Oxide layers typically reform on aluminium alloy surfaces at room temperature if the passivation layer is damaged or removed. As such, compressor or an ambient air source may be utilised to passivate aluminium components. In one example, ambient air is flowed through the fuel system and core engine for a predetermined duration during engine shutdown. In such a scenario, the engine core may be motored (i.e., turned at relatively slow speed without actuating fuel flow) to flow ambient air through the engine core to passivate components susceptible to surface oxidation at such conditions such as aluminium components in the engine core, such as titanium aluminide turbine blades. Such a procedure may be carried out a predetermined intervals between engine cycles, or prior to an initial, first engine cycle after the engine has been manufactured or reconditioned following maintenance.

Running the engine on the alternative fuel for a predetermined duration at a predetermined interval may also be sufficient to produce a passivation layer on engine core components such as the injectors, combustor 26 and turbine 24. For example, the engine may be run on Sustainable Aviation Fuel (SAF) such as Fischer-Tropsch synthetic fuel or bio-derived aviation fuel using the fuel system 12b, 38b, 34b. Such a method may be performed prior to running the engine on hydrogen, either for the first time following manufacture or maintenance, or after a predetermined number of engine cycles or operating hours. Accordingly, the passivation layer can be maintained without interrupting operation of the aircraft.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein. For example, the heaters could use both engine exhaust heat and heat from auxiliary combustors.

Modifications could be made to the disclosed embodiment. For example, the gas turbine engine could be of a different type and could for instance comprise more or fewer compressor and turbines, and could drive a fan, propeller, electrical generator, or other equipment.

## Claims

1. A method of operating a hydrogen fuelled aircraft propulsion system (20), the method comprising:
exposing one or more components (12a, 26, 28, 36a, 38a, 40, 34a, 48, 50, 52, 54, 58) that will contact hydrogen during engine running to an oxygen containing gas at a temperature suitable to cause passivation of at least part of the component (36a, 38a, 40, 34a, 48, 50, 52, 54, 58).

2. A method according to claim 1, wherein the oxygen containing gas comprises air.

3. A method according to claim 1 or claim 2, wherein the component (12a, 36a, 38a, 40, 34a, 48, 50, 52, 54, 58) comprises a component of a fuel system (18) or the component (26, 28) comprises a component of a main gas flow path of a gas turbine engine (14a).

4. A method according to any of the preceding claims, wherein the component comprises a fuel pump (38a), fuel filter (50), fuel tank (12a), fuel accumulator (52), fuel pipe (34a), fuel valve (36a, 54), fuel injector or fuel heater (40) of the fuel system.

5. A method according to any of the preceding claims, wherein the component comprises a combustor (26) or a turbine (28) of a gas turbine engine (14a) of the aircraft propulsion system (20).

6. A method according to claim 4, wherein the method comprises flowing an oxygen containing gas through a fuel line (34a) of the fuel system at a temperature suitable to cause passivation of at least part of the fuel system.

7. A method according to claim 5, wherein the method comprises flowing an oxygen containing gas through a main gas flow path of a gas turbine (14a) engine prior to running the gas turbine engine (14a).

8. A method according to claim 7, wherein the method comprises a pre-conditioning cycle comprising running the gas turbine (14a) on a fuel other than hydrogen prior to running the gas turbine engine with hydrogen fuel.

9. A method according to any of the preceding claims, wherein the component (12a, 26, 28, 36a, 38a, 40, 34a, 48, 50, 52, 54, 58) comprises one or more of a steel such as stainless steel, low-carbon steel or high-strength pipeline steel, a nickel alloy, aluminium metal, or an aluminium alloy.

10. A method according to claim 9, wherein the component (12a, 26, 28, 36a, 38a, 40, 34a, 48, 50, 52, 54, 58) comprises stainless steel and the method comprises exposing the component to air at a temperature between 200°C and 400°C and may comprise exposing the component for a period between 1 minute and 10 hours.

11. A method according to claim 9, wherein the component (12a, 26, 28, 36a, 38a, 40, 34a, 48, 50, 52, 54, 58) comprises a nickel alloy, the method may comprise exposing the component to air at a temperature between 600°C and 1200°C.

12. An aircraft propulsion system comprising a gas turbine engine (14a), a fuel system (18) configured to provide hydrogen fuel to the gas turbine engine (14a), and a passivation air system configured to provide oxygen containing gas to a fuel line (34a) of the fuel system at a temperature sufficient to cause passivation of at least one component of the fuel system.

13. An aircraft propulsion system according to claim 12, wherein the gas turbine engine (14a) comprises a compressor (28) and a bleed line (62), the bleed line (62) being configured to provide compressor bleed air to cause passivation of at least one component of the fuel system (18).

14. An aircraft propulsion system according to claim 12 or claim 13, wherein the gas turbine engine comprises a core exhaust system and a core exhaust line (64) configured to provide core exhaust air to cause passivation of at least one component (12a, 36a, 38a, 40, 34a, 48, 50, 52, 54, 58) of the fuel system (18).

15. An aircraft propulsion system according to any of claims 12 to 14, wherein the fuel system comprises a hydrogen fuel tank (12a) and a further fuel tank (12b) such as a kerosene or a methane fuel tank, and the fuel system comprises a further fuel line (34b) configured to provide the further fuel to the gas turbine engine (14a).
